(19) Europäisches Patentamt
European Patent Office
Office européen des brevets

(11) **EP 3 471 576 B1**

(12) **FASCICULE DE BREVET EUROPEEN**

(45) Date de publication et mention de la délivrance du brevet:
**19.05.2021 Bulletin 2021/20**

(21) Numéro de dépôt: **17742475.1**

(22) Date de dépôt: **19.06.2017**

(51) Int Cl.:
*A45D 34/04* *(2006.01)*     *B65D 47/00* *(2006.01)*
*G01F 11/02* *(2006.01)*

(86) Numéro de dépôt international:
**PCT/FR2017/051603**

(87) Numéro de publication internationale:
**WO 2017/220910 (28.12.2017 Gazette 2017/52)**

(54) **DISPOSITIF DE PRELEVEMENT ET D'APPLICATION DE PRODUIT FLUIDE.**

VORRICHTUNG ZUR AUFNAHME UND ZUM AUFTRAGEN EINES FLÜSSIGPRODUKTS

DEVICE FOR PICKING UP AND APPLYING A FLUID PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2016 FR 1655784**

(43) Date de publication de la demande:
**24.04.2019 Bulletin 2019/17**

(73) Titulaire: **APTAR France SAS**
**27110 Le Neubourg (FR)**

(72) Inventeurs:
- **BRAHIM, Xavier**
  **27190 Conches En Ouche (FR)**
- **CORNET, Gérard**
  **78270 Blaru (FR)**

(74) Mandataire: **CAPRI**
**33, rue de Naples**
**75008 Paris (FR)**

(56) Documents cités:
**WO-A1-2013/017803      FR-A1- 2 924 696**
**FR-A1- 2 998 458      US-A1- 2014 131 392**

**Description**

La présente invention concerne un dispositif comprenant une pièce de base et un organe amovible monté de manière amovible sur la pièce de base. L'organe amovible coulisse de manière étanche dans la pièce de base sur une course axiale déterminée. Les domaines d'application privilégiés de la présente invention sont ceux de la parfumerie, de la cosmétique ou encore de la pharmacie. La pièce de base peut être solidaire d'un réservoir de produit fluide, et l'organe mobile peut être un applicateur.

Dans le domaine de la parfumerie, on connaît le document WO2013/017803 qui décrit un distributeur applicateur comprenant un organe amovible doté d'un applicateur qui est adapté à être retiré axialement par coulissement étanche hors d'une pièce de base qui comprend un godet dont le fond est percé d'un orifice d'injection relié à un tube plongeur. Plus précisément, l'organe amovible est dévissé de la pièce de base, ce qui engendre son déplacement axial coulissant : en fin de dévissage, l'organe amovible peut être complètement retiré et séparé de la pièce de base pour pouvoir mettre l'applicateur en contact d'une surface appropriée, telle que la peau. Lors du dévissage, une dépression se forme entre la pièce de base et l'organe amovible, de sorte que du produit fluide stocké dans un réservoir est aspiré à travers le tube plongeur et l'orifice d'injection pour remplir l'applicateur.

D'autre part, on peut constater dans ce document WO2013/017803 que l'applicateur est formé par une tubulure définissant intérieurement un espace de prélèvement et d'application. La tubulure est entourée par un piston qui coulisse à l'intérieur d'un fût de coulissement formé par la partie supérieure du godet. Ainsi, l'aspiration qui permet de remplir l'applicateur par injection est créée par le coulissement du piston à l'intérieur de la partie haute du godet. Il n'y a aucun contact coulissant avec la tubulure formant l'applicateur.

Un autre problème avec le distributeur de ce document WO2013/017803 réside dans le fait que le godet est partiellement rempli avec du produit fluide une fois que l'applicateur en est retiré. Ceci est clairement visible sur la figure 6 de ce document. Par conséquent, le contenu du godet pourrait être perdu ou renversé accidentellement. En effet, une fois l'applicateur retiré, le godet est largement ouvert et le produit fluide qu'il contient est à l'air libre. Mais lorsque l'on remet l'applicateur en place, le contenu du godet (produit fluide + air) est refoulé par le coulissement étanche dans le réservoir à travers le tube plongeur, qui reste ainsi vide jusqu'au prochain retrait de l'applicateur.

La présente invention a pour but de remédier aux inconvénients précités de l'art antérieur en définissant un distributeur applicateur du type décrit dans le document WO2013/017803, mais dont le godet ne contient pas de produit fluide une fois l'applicateur retiré, de manière à éviter tout risque de perte ou de renversement de produit fluide.

Pour ce faire, la présente invention propose un dispositif de prélèvement et d'application de produit fluide selon la revendication 1

Le document WO2013/017803 décrit un dispositif de prélèvement selon le préambule de la revendication 1.

Concernant la première formule apparaissant dans la revendication 1, soit $Va = Hac.\pi.Dp^2/4 > Vtp$, il a été constaté empiriquement que l'aspiration génère une dépression telle que le produit fluide contenu dans le tube plongeur est littéralement injecté et pulvérisé à l'intérieur de l'espace de prélèvement et d'application. Ainsi, il suffit que la dépression remplisse le tube plongeur, qui est initialement vide, pour que son contenu soit propulsé à l'intérieur de l'espace de prélèvement et d'application. D'où la formule $Hac > 4Vtp/\pi.Dp^2$, qui constitue une condition minimale pour assurer que du produit fluide a été injecté à l'intérieur de l'espace de prélèvement et d'application. Il faut garder à l'esprit que le tube plongeur est vide de produit fluide lorsque l'orange amovible est en place sur la pièce de base. Grâce à l'injection du produit fluide dans l'espace de prélèvement et d'application, il suffit que le tube plongeur soit rempli de produit fluide pour remplir partiellement l'espace de prélèvement et d'application. Ceci n'aurait pas pu être le cas si le produit fluide n'avait été qu'aspiré sans créer d'injection/pulvérisation dans l'espace de prélèvement et d'application.

Avec la condition exprimée par la seconde formule apparaissant dans la revendication 1, soit $Hac < 4(Vtp + Vp)/\pi.Dp^2$, on garantit que l'espace de prélèvement et d'application est rempli de produit fluide, sans laisser de produit fluide à l'intérieur du godet une fois l'applicateur retiré. Il s'agit donc d'une condition maximale pour garantir l'objectif de l'invention, à savoir un godet vide une fois l'applicateur retiré.

Il faut également remarquer que le dispositif de la présente invention prévoit un piston solidaire du godet qui vient en contact de coulissement étanche directement avec la paroi externe de la tubulure formant intérieurement l'espace de prélèvement et d'application. Il s'agit là d'une caractéristique qui pourrait être protégée en soi, car elle diffère de la structure du document WO2013/017803.

Selon une forme de réalisation pratique, lorsque l'organe amovible est monté à fond sur la pièce de base, la tubulure présente, en-dessous de la lèvre de piston, une paroi externe cylindrique ayant une hauteur axiale égale à Hac. Avantageusement, la tubulure présente, en-dessous de la paroi externe cylindrique, un défaut de cylindricité, au niveau duquel la lèvre de piston n'est plus en contact étanche de coulissement. Le défaut de cylindricité peut par exemple être formé par une réduction de diamètre. En variante, le défaut de cylindricité peut être formé par des rainures axiales. Ainsi, la hauteur axiale Hac peut très simplement être définie en profilant très légèrement la paroi externe de la tubulure.

Selon un autre aspect de l'invention, la tubulure présente une extrémité supérieure, le piston formant la lèvre de piston et un talon de fixation solidaire du godet, la lèvre de piston et le talon de fixation étant disposés axialement en-dessous de cette extrémité supérieure, lorsque organe amovible est monté à fond sur la pièce de base. Avantageusement, l'extrémité supérieure de la tubulure est formée par une collerette annulaire saillante, qui vient avantageusement en contact appuyé avec le talon de fixation pour créer une étanchéité.

Selon un mode de réalisation pratique, le talon de fixation est en contact de l'extrémité supérieure de la tubulure, la lèvre de piston étant reliée au talon de fixation par une section de liaison cylindrique dont la hauteur axiale est telle que la tubulure présente, en-dessous de la lèvre de piston, une paroi externe cylindrique ayant une hauteur axiale égale à Hac. En variante, le talon de fixation est situé en éloignement axial de l'extrémité supérieure sur la hauteur de la tubulure. Ainsi, on peut jouer sur la configuration ou le positionnement du piston pour déterminer avec précision la hauteur axiale Hac.

Selon un autre aspect pratique, l'organe amovible peut comprendre un filetage externe disposé entre l'appendice de préhension et la tubulure, ce filetage externe coopérant avec un filetage interne formé par la pièce de base. D'autre part, le godet peut comprendre une section inférieure de diamètre réduit et une section supérieure de diamètre accru au niveau duquel est monté le piston.

L'esprit de l'invention réside dans le fait de déterminer la hauteur axiale de coulissement Hac de manière à garantir à la fois l'injection de produit fluide dans l'espace de prélèvement et d'application et l'absence de produit fluide au fond du godet une fois l'applicateur retiré. Cette hauteur axiale Hac peut être déterminée soit en influant sur la tubulure, soit en influant sur la configuration ou le positionnement de la lèvre de piston.

L'invention sera maintenant décrite plus en détail en référence aux dessins joints, donnant à titre d'exemples non limitatifs, plusieurs modes de réalisation de l'invention.

Sur les figures :

Les figures 1a et 1b sont des vues en coupe à travers un distributeur qui n'incorpore pas la présente invention,
La figure 1c est une vue en perspective de l'organe mobile des figures 1a et 1b,
Les figures 2a et 2b sont des vues en coupe transversale à travers un distributeur selon une première forme de réalisation de l'invention,
La figure 2c est une vue en perspective de l'organe mobile des figures 2a et 2b,
Les figures 3a et 3b sont des vues en coupe transversale verticale à travers un distributeur selon un second mode de réalisation de l'invention,
La figure 3c est une vue en perspective de l'organe mobile des figures 3a et 3b,
La figure 4a est une vue en coupe transversale verticale à travers un distributeur selon un troisième mode de réalisation de l'invention,
La figure 4b est une vue fortement agrandie du détail A de la figure 4a,
La figure 5a est une vue en coupe transversale verticale à travers un distributeur selon un quatrième mode de réalisation de l'invention, et
La figure 5b est une vue fortement agrandie du détail B de la figure 5a.

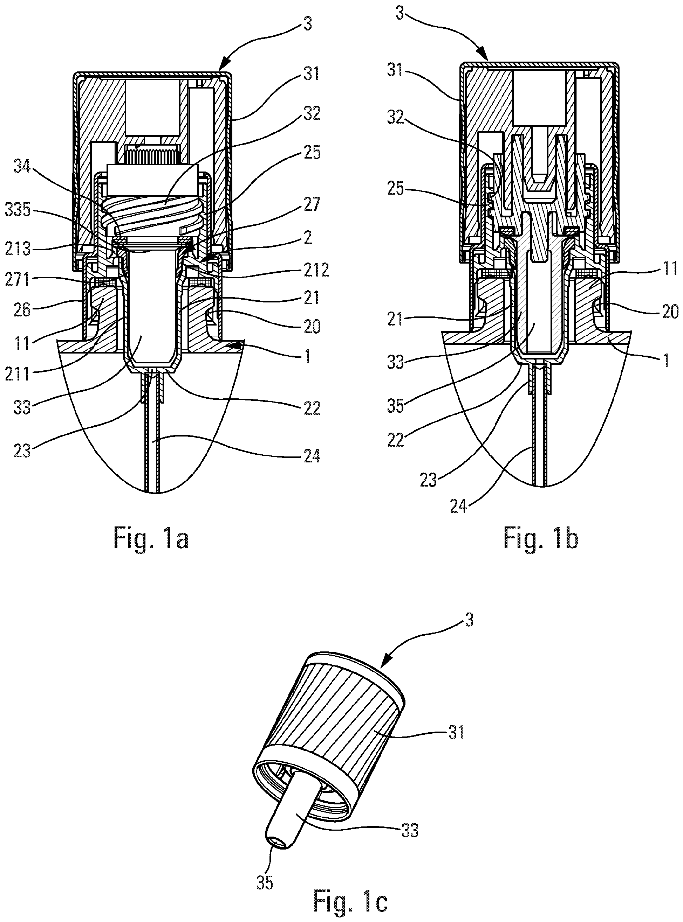

On se référera tout d'abord aux figures 1a, 1b et 1c pour décrire en détail la structure et le fonctionnement d'un distributeur applicateur de produit fluide qui peut être utilisé comme distributeur de base pour y intégrer la présente invention. Les quatre modes de réalisation de l'invention qui seront ci-après exposés ne détailleront que les différences par rapport à ce distributeur applicateur de base.

Le distributeur comprend tout d'abord un réservoir de produit fluide 1 qui n'est représenté que très partiellement. En effet, les figures 1a et 1b ne représentent que la partie supérieure du réservoir 1 qui forme un col 11 qui est tout à fait classique, avec un renfort extérieur pour l'accrochage. Le réservoir de produit fluide 1 peut être de toute nature et être réalisé en un matériau quelconque, étant donné que le réservoir n'est pas un élément critique pour la présente invention.

Outre le réservoir 1, le distributeur comprend deux autres pièces constitutives, à savoir une pièce de base 2 qui est montée fixement sur le réservoir 1 et un organe amovible 3 qui est monté de manière amovible sur la pièce de base 2.

La pièce de base 2 comprend des moyens d'accrochage, qui peuvent se présenter sous la forme d'une jupe 20, fendue ou non, qui vient en prise autour du col du réservoir 1. Il s'agit là d'une conception tout à fait classique pour la fixation d'un organe de distribution dans les domaines de la cosmétique, la parfumerie ou encore la pharmacie. L'accrochage de la jupe 20 autour du col de réservoir 1 peut servir à écraser un joint de col annulaire sur le bord supérieur du col. La pièce de base 2 comprend également un godet 21 qui s'étend à l'intérieur du col 11 du réservoir. A son extrémité inférieure, le godet 21 forme un fond 22 qui est percé d'un orifice d'injection 23 qui communique directement avec un tube plongeur 24 qui s'étend à l'intérieur du réservoir 1 jusqu'à proximité de son fond. Le godet 21 comprend une section inférieure 211 de diamètre réduit et une section supérieure 212 de diamètre accru au niveau duquel est monté un piston 27 qui forme une lèvre de piston 271. Le piston 27 est une pièce rapportée qui est mise en place dans le godet et maintenue par exemple par encliquetage. On peut également prévoir de réaliser le piston 27 par surmoulage ou bi-injection. La technique du maintien du piston 27 dans le godet 21 n'est pas critique pour la présente invention. Sur les figures, le piston 27 forme un talon qui est encliqueté dans un logement 213. Par ailleurs, la pièce de base 2 forme une douille formant un filetage intérieur 25. Optionnellement, la pièce de base 2 peut comprendre une frette d'habillage extérieure 26, qui peut éventuellement participer au maintien de la jupe 20 autour du col 11.

L'organe amovible 3 comprend un appendice de préhension 31 que l'utilisateur peut saisir entre ses doigts. Intérieurement, l'organe amovible 3 forme un filetage externe 32 apte à coopérer avec le filetage interne 25 de la pièce de base 2. L'organe amovible 3 comprend également une tubulure 33 de forme sensiblement cylindrique et définissant intérieurement un espace de prélèvement et d'application 35 qui est disposé dans l'alignement axial de l'orifice d'injection 23, comme on peut le voir sur la figure 1b. On voit en effet que cet espace 35 est ouvert à son extrémité inférieure et fermé à son extrémité supérieure, de manière à définir un espace borgne. L'ouverture de l'espace 35 est située à proximité de l'orifice d'injection 23. On peut également constater que la tubulure 23 vient en contact étanche avec la lèvre 271 du piston 27. Optionnellement, l'organe amovible 3 comprend un joint 34 destiné à venir en contact avec le logement d'encliquetage 213.

En partant de la configuration représentée sur les figures 1a et 1b, un utilisateur peut saisir l'appendice de préhension 31 pour lui imprimer un mouvement de rotation, ce qui a pour effet de dévisser l'organe amovible 3 de la pièce de base 2. Ce faisant, la tubulure 33 coulisse de manière étanche à l'intérieur du piston 27, créant une dépression à l'intérieur de l'espace de prélèvement et d'application 35. Cette dépression va générer une aspiration de produit fluide en provenance du réservoir 1 à travers le tube plongeur 24 et l'orifice d'injection 23. Le produit fluide va ainsi littéralement être injecté sous la forme d'un jet axial à l'intérieur de l'espace de prélèvement et d'application 35. L'injection de produit fluide va se poursuivre jusqu'à ce que l'espace 35 soit rempli et même au-delà, tant que la tubulure 33 est en contact de coulissement étanche à l'intérieur du piston 27. On peut ainsi définir une hauteur axiale de coulissement étanche Hac entre le piston 27 et la tubulure 33. Cette hauteur axiale Hac peut être supérieure à la hauteur de dévissage. Avec la conception représentée sur les figures 1a et 1b, la hauteur axiale de coulissement est conséquente, de sorte qu'une grande quantité de produit fluide va être aspirée et injectée dans l'espace de prélèvement 35. Cette quantité est telle qu'elle va même remplir une partie du godet 21, une fois que l'organe amovible 3 sera complètement retiré de la pièce de base 1. Ainsi, l'inconvénient avec ce distributeur applicateur est qu'il reste du produit fluide dans le godet 21, une fois l'organe amovible 3 retiré. Ce produit fluide peut être perdu ou renversé, étant donné que le godet 21 est largement ouvert vers l'extérieur une fois l'organe amovible 3 retiré.

Cependant, lors de la remise en place de l'organe amovible 3 sur la pièce de base 1, le reste de produit fluide dans le godet 21 et le produit fluide contenu dans le tube plongeur 24 sont refoulés dans le réservoir 1, du fait de la surpression qui s'établit dès lors que le piston 27 coulisse à nouveau de manière étanche dans la tubulure 33. Au repos, le godet 21 et le tube plongeur 24 sont donc vides de produit fluide.

On peut toutefois noter que ce distributeur applicateur présente la particularité que le piston 27 coulisse directement contre la tubulure 33 à l'intérieur de laquelle est formé l'espace de prélèvement et d'application 35. Il s'agit là d'une caractéristique qui pourrait être protégée en soi.

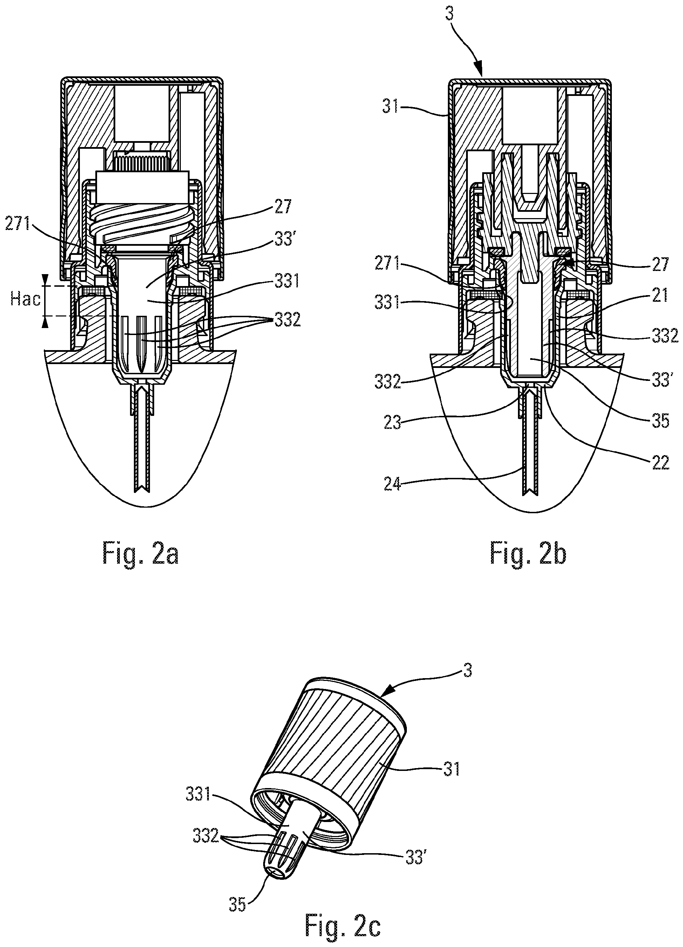

On se référera maintenant aux figures 2a, 2b et 2c pour décrire le premier mode de réalisation qui incorpore l'invention. Ce distributeur applicateur de l'invention peut être en tout point identique à celui des figures 1a et 1b, excepté le fait que la tubulure 33' est pourvue de plusieurs rainures axiales 332 qui créent une discontinuité dans la cylindricité de la tubulure 33'. Ces rainures 332 s'étendent au niveau de la partie inférieure de la tubulure 33', de sorte qu'une paroi externe cylindrique 331 est définie entre la lèvre 271 du piston 27 et le commencement des rainures 332. Cette paroi externe cylindrique 331 présente une hauteur axiale Hac qui, multipliée par la surface correpondant au diamètre interne Dp de la lèvre de piston 271, définit un volume d'aspiration Va qui est supérieur au volume interne Vtp du tube plongeur 24, d'où la formule :

$$Hac > 4Vtp/ \pi.Dp^2.$$

Ainsi, on garantit que du produit fluide va être injecté à l'intérieur de l'espace de prélèvement de l'application 35. Il a en effet été constaté que l'aspiration est suffisamment forte pour propulser du produit fluide à l'intérieur de l'espace de prélèvement et d'application, dès lors que le tube plongeur est rempli de produit fluide.

Ainsi, les rainures 332 permettent de déterminer avec précision la hauteur axiale de coulissement Hac sans modifier grandement le godet 21, ni la tubulure 33', tout en maintenant l'entrée de l'espace 35 à proximité direct de l'orifice d'injection 23. Les rainures 332 constituent ainsi une modification mineure par rapport à la conception des figures 1a et 1b, qui permet cependant d'assurer que du produit fluide est présent dans l'espace de prélèvement et d'application 35 et qu'il n'y a pas de produit fluide à l'intérieur du godet 21, une fois l'organe amovible 3 retiré de la pièce de base 1.

Toujours au moyen des rainures 332, la hauteur axiale de coulissement Hac pourrait également être fixée de manière à définir un volume d'aspiration Va qui correspond au volume Vtp du tube plongeur 24 plus le volume Vp de l'espace de prélèvement et d'application 35. D'où la formule :

$$Hac < 4(Vtp + Vp)/\pi.Dp^2.$$

On garantit ainsi que l'espace de prélèvement et d'application 35 est complètement rempli de produit fluide, et qu'il n'y a pas de produit fluide à l'intérieur du godet 21, une fois l'organe amovible 3 retiré.

Ainsi, afin de garantir la présence de produit fluide à l'intérieur de l'espace de prélèvement et d'application 35, sans qu'il y ait de produit fluide à l'intérieur du godet 3 une fois l'organe amovible 3 retiré, il faut que Hac réponde à la formule suivante :

$$4Vtp/ \pi.Dp^2 < Hac < 4(Vtp + Vp)/\pi.Dp^2.$$

Selon l'invention, cette condition pour Hac peut simplement être remplie en formant des rainures verticales axiales 332 sur la tubulure 33' en définissant avec précision à quelle hauteur axiale commence ces rainures.

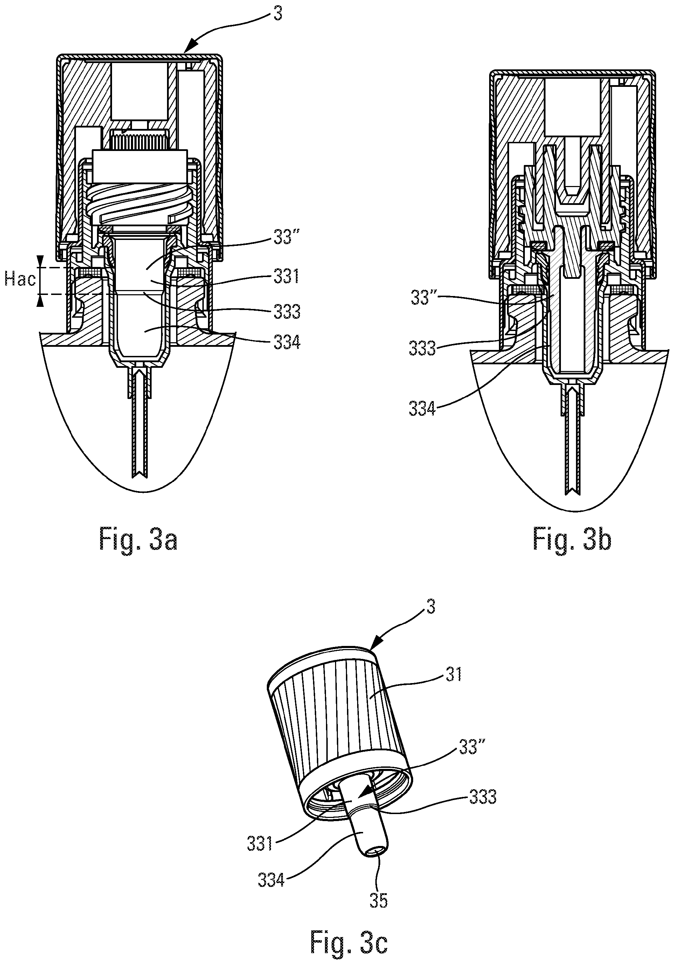

En se référant aux figures 3a, 3b et 3c, on voit un deuxième mode de réalisation pour l'invention. Les rainures 332 ont ici été remplacées par une réduction de diamètre 333 sous la forme d'un épaulement rentrant, définissant ainsi une paroi externe cylindrique 331 de diamètre supérieur et une paroi inférieure cylindrique 334 de diamètre inférieur réduit. La réduction de diamètre 333 définit la hauteur axiale de coulissement Hac qui peut être déterminée comme précédemment, en référence aux figures 2a, 2b et 2c, à savoir :

$$Hac > 4Vtp/ \pi.Dp^2 \text{ et/ou } Hac < 4(Vtp + Vp)/\pi.Dp^2.$$

Là encore, la hauteur axiale de coulissement Hac est déterminée très simplement en modifiant uniquement la tubulure 33 des figures 1a et 1b en y formant une réduction de diamètre 333. On ne modifie ni le godet, ni le piston, et très légèrement la tubulure. Le résultat obtenu est le même que pour le premier mode de réalisation des figures 2a, 2b et 2c.

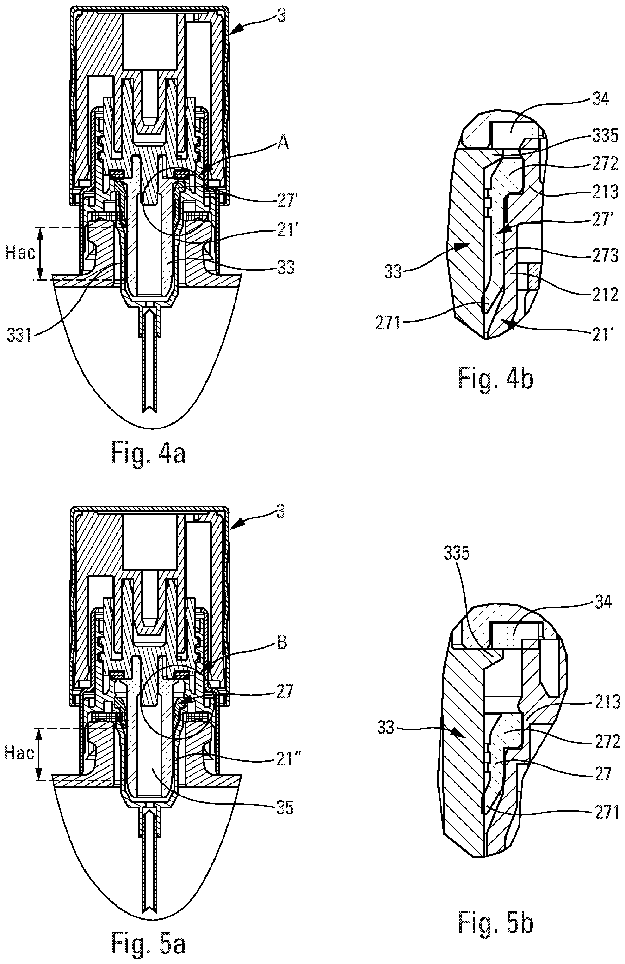

En se référant aux figures 4a et 4b, on voit un troisième mode de réalisation, dans lequel l'organe amovible 3 peut être strictement identique à celui du mode de réalisation des figures 1a et 1b. En revanche, le piston 27' et le godet 21' sont légèrement différents. En se référant à la figure 4b, on peut voir que le piston 27' comprend un talon d'ancrage 272 qui est en prise dans le logement de réception 213. On peut également voir le bord annulaire supérieur du logement 213 comprimé le joint 34. Il est également visible que la tubulure 33 forme une collerette annulaire saillante 335 qui maintient le joint 34 en place et qui vient en contact avec le talon d'ancrage 272, de manière à y créer éventuellement une étanchéité. Le piston 27' se caractérise essentiellement en ce qu'il forme une section de liaison cylindrique 273 au bout de laquelle est formée la lèvre de piston 271. La hauteur axiale de cette section de liaison cylindrique 273 est telle que la tubulure 33 présente, en dessous de la lèvre de piston 271, une paroi externe cylindrique 331 ayant une hauteur axiale égale à Hac, avec Hac répondant à nouveau aux conditions susmentionnées, à savoir :

$$Hac > 4Vtp/ \pi.Dp^2 \text{ et/ou } Hac < 4(Vtp + Vp)/\pi.Dp^2.$$

Ainsi, Hac peut être défini simplement en modifiant légèrement le piston, ainsi que le godet au niveau de sa section supérieure 212. L'organe amovible 3 est identique à celui des figures 1a et 1b.

En se référant aux figures 5a et 5b, on voit un quatrième mode de réalisation de l'invention. L'organe amovible 3 peut être strictement identique à celui des figures 1a et 1b. Le piston 27 peut également être identique à celui des figures 1a et 1b. En revanche, le godet 21 a été modifié de manière à abaisser axialement le logement d'encliquetage 213, comme on peut le voir plus clairement sur la figure 5b. Le talon 272 du piston 27 n'est plus en contact de la collerette saillante 335 qui maintient le joint 34 en place. En revanche, le bord supérieur du logement 213 vient toujours en contact de ce joint 34.

Une hauteur axiale de coulissement Hac est ainsi définie de la même manière que dans le mode de réalisation des figures 4a et 4b. Cette hauteur axiale de coulissement Hac peut simplement servir à remplir partiellement l'espace de prélèvement et d'application 35 ou encore à le remplir totalement.

A nouveau, Hac peut être déterminé en modifiant uniquement le godet.

Grâce à l'invention, on peut déterminer la hauteur axiale de coulissement Hac avec de très légères modifications par rapport à un distributeur applicateur de base, afin de garantir la présence de produit fluide dans l'espace de prélèvement et d'application et/ou l'absence de produit fluide dans le godet, une fois l'organe amovible retiré.

**Revendications**

1. Dispositif de prélèvement et d'application de produit fluide comprenant :

   - une pièce de base (2) montée sur un réservoir de produit fluide (1), la pièce de base (2) comprenant un tube plongeur (24) définissant un volume interne de tube Vtp et un godet (21 ; 21' ; 21") au fond (22) duquel est formé un orifice d'injection (23) raccordé au tube plongeur (24), le godet (21) étant pourvu d'un piston (27 ; 27') formant une lèvre de piston (271) qui présente un diamètre de piston Dp, et
   - un organe amovible (3) monté de manière amovible sur la pièce de base (2), l'organe amovible (3) comprenant un appendice de préhension (31), une tubulure (33'; 33"; 33) apte à coulisser de manière étanche contre la lèvre de piston (271) sur une course axiale étanche et un applicateur (35) apte à retenir une dose de produit fluide issue du tube plongeur (24) par aspiration générée par le coulissement étanche de la tubulure (33 ; 33" ; 33) contre la lèvre de piston (271) sur ladite course axiale étanche, l'applicateur comprenant un espace de prélèvement et d'application (35) définissant un volume de prélèvement Vp, cet espace de prélèvement et d'application (35) étant formé dans la tubulure (33 ; 33" ; 33), le produit fluide étant injecté dans cet espace de prélèvement et d'application (35) à travers le tube plongeur (24) et l'orifice d'injection (23),
   dans lequel la course axiale étanche Cae représente une hauteur axiale de coulissement Hac qui est déterminée de telle sorte que cette hauteur Hac corrélée au diamètre de piston Dp de la lèvre de piston (271) définit un volume d'aspiration Va qui est supérieur au volume interne de tube Vtp, de sorte que Hac répond à la formule :

   $$Va = Hac.\pi.Dp^2/4 > Vtp \text{ d'où : } Hac > 4Vtp/\pi.Dp^2$$

   **caractérisé en ce que** le volume d'aspiration Va est inférieur à la somme du volume interne de tube Vtp et du volume de prélèvement Vp, de sorte que Hac répond en outre à la formule :

   $$Hac < 4(Vtp + Vp)/\pi.Dp^2.$$

2. Distributeur selon la revendication 1, dans lequel, lorsque l'organe amovible (3) est monté à fond sur la pièce de base (2), la tubulure (33 ; 33" ; 33) présente, en-dessous de la lèvre de piston (271), une paroi externe cylindrique (331) ayant une hauteur axiale égale à Hac.

3. Distributeur selon la revendication 2, dans lequel la tubulure (33' ; 33") présente, en-dessous de la paroi externe cylindrique (331), un défaut de cylindricité (332, 333), au niveau duquel la lèvre de piston (271) n'est plus en contact étanche de coulissement.

4. Distributeur selon la revendication 3, dans lequel le défaut de cylindricité est formé par une réduction de diamètre (333).

5. Distributeur selon la revendication 3, dans lequel le défaut de cylindricité est formé par des rainures axiales (332).

6. Distributeur selon l'une quelconque des revendications précédente, dans lequel la tubulure (33) présente une extrémité supérieure (335), le piston (27' ; 27") formant la lèvre de piston (271) et un talon de fixation (272) solidaire du godet (21'; 21"), la lèvre de piston (271) et le talon de fixation (272) étant disposés axialement en-dessous de cette extrémité supérieure (335), lorsque organe amovible (3) est monté à fond sur la pièce de base (2).

7. Distributeur selon la revendication 6, dans lequel l'extrémité supérieure de la tubulure (33) est formée par une collerette annulaire saillante (335), qui vient avantageusement en contact appuyé avec le talon de fixation (272) pour créer une étanchéité.

8. Distributeur selon la revendication 6 ou 7, dans lequel le talon de fixation (272) est en contact de l'extrémité supérieure (335) de la tubulure (33), la lèvre de piston (271) étant reliée au talon de fixation (272) par une section de liaison cylindrique (273) dont la hauteur axiale est telle que la tubulure (33) présente, en-dessous de la lèvre de piston (271), une paroi externe cylindrique (331) ayant une hauteur axiale égale à Hac.

9. Distributeur selon la revendication 6 ou 7, dans lequel le talon de fixation (272) est situé en éloignement axial de l'extrémité supérieure (331) sur la hauteur de la tubulure (33).

**10.** Distributeur selon l'une quelconque des revendications précédentes, dans lequel l'organe amovible (3) comprend un filetage externe (32) disposé entre l'appendice de préhension (31) et la tubulure (33 ; 33'' ; 33), ce filetage externe (32) coopérant avec un filetage interne (25) formé par la pièce de base (2).

**11.** Distributeur selon l'une quelconque des revendications précédentes, dans lequel le godet (21 ; 21' ; 21'') comprend une section inférieure (211) de diamètre réduit et une section supérieure (212) de diamètre accru au niveau duquel est monté le piston (27 ; 27').

**Patentansprüche**

**1.** Vorrichtung zum Entnehmen und Anwenden eines Fluidprodukts, die Folgendes umfasst:

- ein Basisteil (2), das an einem Fluidprodukt-Vorratsbehälter (1) angebracht ist, wobei das Basisteil (2) ein Tauchrohr (24), das ein Rohrinnenvolumen Vtp definiert, und einen Becher (21; 21'; 21''), in dessen Boden eine Einspritzöffnung (23) gebildet ist, die mit dem Tauchrohr (24 verbunden ist, umfasst, wobei der Becher (21) mit einem Kolben (27; 27') versehen ist, der eine Kolbenfase (271) bildet, die einen Kolbendurchmesser Dp aufweist, und
- ein abnehmbares Organ (3), das an dem Basisteil (2) abnehmbar angebracht ist, wobei das abnehmbare Organ (3) einen Greifansatz (31), eine Rohrleitung (33'; 33''; 33), die an der Kolbenfase (271) auf einer dichten axialen Bahn dicht gleiten kann, und einen Applikator (35), der eine Fluidprodukt-Dosis halten kann, die von dem Tauchrohr (24) durch eine Saugkraft, die durch das dichte Gleiten der Rohrleitung (33'; 33''; 33) an der Kolbenfase (271) auf der dichten axialen Bahn erzeugt wird, ausgegeben wird, umfasst, wobei der Applikator einen Entnahme- und Anwendungsraum (35) enthält, der ein Entnahmevolumen Vp definiert, wobei dieser Entnahme- und Anwendungsraum (35) in der Rohrleitung (33'; 33''; 33) gebildet ist, wobei das Fluidprodukt in diesen Entnahme- und Anwendungsraum (35) durch das Tauchrohr (24) und die Einspritzöffnung (23) eingespritzt wird,
wobei die dichte axiale Bahn Cae eine axiale Gleithöhe Hac aufweist, die in der Weise festgelegt ist, dass diese Höhe Hac, die mit dem Kolbendurchmesser Dp der Kolbenfase (271) korreliert ist, ein Ansaugvolumen Va definiert, das größer als das Rohrinnenvolumen Vtp ist, derart, dass Hac die folgende Formel erfüllt:

$$Va = Hac \cdot \pi \cdot Dp^2 / 4 > Vtp \text{, wobei } Hac > 4Vtp / \pi \cdot Dp^2,$$

**dadurch gekennzeichnet, dass** das Ansaugvolumen Va kleiner als die Summe aus dem Rohrinnenvolumen Vtp und dem Entnahmevolumen Vp ist, derart, dass Hac außerdem die folgende Formel erfüllt:

$$Hac < 4\left(Vtp + Vp\right) / \pi \cdot Dp^2.$$

**2.** Verteiler nach Anspruch 1, wobei die Rohrleitung (33; 33''; 33) dann, wenn das abnehmbare Organ (3) vollständig am Basisteil (2) angebracht ist, unter der Kolbenfase (271) eine zylindrische Außenwand (331) aufweist, die eine axiale Höhe besitzt, die gleich Hac ist.

**3.** Verteiler nach Anspruch 2, wobei die Rohrleitung (33'; 33'') unter der zylindrischen Außenwand (331) einen Defekt (332, 333) der Zylindrizität aufweist, auf dessen Höhe die Kolbenfase (271) nicht mehr in dichtem Gleitkontakt ist.

**4.** Verteiler nach Anspruch 3, wobei der Defekt der Zylindrizität durch eine Verringerung (333) des Durchmessers gebildet ist.

**5.** Verteiler nach Anspruch 3, wobei der Defekt der Zylindrizität durch axiale Rillen (332) gebildet ist.

**6.** Verteiler nach einem der vorhergehenden Ansprüche, wobei die Rohrleitung (33) ein oberes Ende (335) aufweist und der Kolben (27'; 27'') die Kolbenfase (271) und einen Befestigungsansatz (272), der mit dem Becher (21'; 21'') fest verbunden ist, bildet, wobei die Kolbenfase (271) und der Befestigungsansatz (272) axial unterhalb dieses oberen Endes (335) angeordnet sind, wenn das abnehmbare Organ (3) vollständig am Basisteil (2) angebracht ist.

**7.** Verteiler nach Anspruch 6, wobei das obere Ende der Rohrleitung (33) durch einen vorstehenden, ringförmigen Kranz (335) gebildet ist, der vorzugsweise mit dem Befestigungsansatz (272) in einem abstützenden Kontakt ist, um eine Dichtigkeit zu erzeugen.

8. Verteiler nach Anspruch 6 oder 7, wobei der Befestigungsansatz (272) mit dem oberen Ende (335) der Rohrleitung (33) in Kontakt ist, wobei die Kolbenfase (271) mit dem Befestigungsansatz (272) durch einen zylindrischen Verbindungsabschnitt (273) verbunden ist, dessen axiale Höhe derart ist, dass die Rohrleitung (33) unter der Kolbenfase (271) eine zylindrische Außenwand (331) aufweist, die eine axiale Höhe besitzt, die gleich Hac ist.

9. Verteiler nach Anspruch 6 oder 7, wobei sich der Befestigungsansatz (272) längs der Höhe der Rohrleitung (33) axial entfernt von dem oberen Ende (331) befindet.

10. Verteiler nach einem der vorhergehenden Ansprüche, wobei das abnehmbare Organ (3) ein Außengewinde (32) aufweist, das zwischen dem Greifansatz (31) und der Rohrleitung (33'; 33"; 33) angeordnet ist, wobei dieses Außengewinde (32) mit einem Innengewinde (25) zusammenwirkt, das an dem Basisteil (2) gebildet ist.

11. Verteiler nach einem der vorhergehenden Ansprüche, wobei der Becher (21; 21'; 21") einen unteren Querschnitt (211) mit verringertem Durchmesser und einen oberen Querschnitt (212) mit erhöhtem Durchmesser, auf dessen Höhe der Kolben (27; 27') angebracht ist, aufweist.

**Claims**

1. A device for withdrawing and applying a fluid product comprising:

   - a base piece (2) mounted to a fluid product tank(1), the base piece (2) comprising a dip tube (24) defining a tube inner volume Vtp and a cup (21; 21'; 21") at the bottom (22) of which an injection hole (23) is formed, being connected to the dip tube (24), the cup (21) being provided with a piston (27; 27') forming a piston lip (271) having a piston diameter Dp, and
   - a removable member (3) removably mounted to the base piece (2), the removable member (3) comprising a gripping tab (31), a tubing (33'; 33"; 33) capable of sealingly sliding against the piston lip (271) over a sealed axial stroke and an applicator (35) capable of holding a fluid product dose from the dip tube (24) by a suction generated by sealingly sliding the tubing (33; 33"; 33) against the piston lip (271) over said sealed axial stroke, the applicator comprising a withdrawal and application space (35) defining a withdrawal volume Vp, this withdrawal and application space (35) being formed in the tubing (33; 33"; 33), the fluid product being injected into this withdrawal and application space (35) through the dip tube (24) and the injection hole (23),
   wherein the sealed axial stroke Cae represents an axial sliding height Hac which is determined so that this height Hac correlated with the piston diameter Dp of the piston lip (271) defines a suction volume Va which is greater than the tube inner volume Vtp, so that Hac meets the formula:

$$Va = Hac.\pi.Dp^2/4 > Vtp \text{ hence: } Hac > 4Vtp/\pi.Dp^2$$

   **characterised in that** the suction volume Va is lower than the sum of the tube inner volume Vtp and of the withdrawal volume Vp, so that Hac further meets the formula:

$$Hac < 4(Vtp + Vp)/\pi.Dp^2$$

2. The dispenser according to claim 1, wherein, when the removable member (3) is thoroughly mounted to the base piece (2), the tubing (33; 33"; 33) has, beneath the piston lip (271), a cylindrical outer wall (331) having an axial height equal to Hac.

3. The dispenser according to claim 2, wherein the tubing (33'; 33") has, beneath the cylindrical outer wall (331), a cylindricity fault (332, 333), at which the piston lip (271) is no longer in sealed sliding contact.

4. The dispenser according to claim 3, wherein the cylindricity fault is formed by a diameter reduction (333).

5. The dispenser according to claim 3, wherein the cylindricity fault is formed by axial grooves (332).

6. The dispenser according to any of the preceding claims, wherein the tubing (33) has an upper end (335), the piston (27'; 27") forming the piston lip (271) and a fastening land (272) integral with the cup (21'; 21"), the piston lip (271) and the fastening land (272) being disposed axially beneath this upper end (335), when the removable member (3) is thoroughly mounted to the base piece (2).

7. The dispenser according to claim 6, wherein the upper end of the tubing (33) is formed by a projecting annular flange (335), which advantageously comes into pressing contact with the fastening land (272) to create sealing.

8. The dispenser according to claim 6 or 7, wherein the fastening land (272) is in contact with the upper end (335) of the tubing (33), the piston lip (271) being connected to the fastening land (272) by a cylindrical connecting section (273) the axial height of which is such that the tubing (33) has, below the piston lip (271), a cylindrical outer wall (331) having an axial height equal to Hac.

9. The dispenser according to claim 6 or 7, wherein the fastening land (272) is located axially away from the upper end (331) over the height of the tubing (33).

10. The dispenser according to any of the preceding claims, wherein the removable member (3) comprises an outer thread (32) disposed between the gripping tab (31) and the tubing (33; 33"; 33), this outer thread (32) cooperating with an inner thread (25) formed by the base piece (2).

11. The dispenser according to any of the preceding claims, wherein the cup (21; 21'; 21") comprises a lower section (211) with a reduced diameter and an upper section (212) with an increased diameter at which the piston (27; 27') is mounted.

Fig. 1a

Fig. 1b

Fig. 1c

Fig. 2a

Fig. 2b

Fig. 2c

Fig. 3a

Fig. 3b

Fig. 3c

Fig. 4a

Fig. 4b

Fig. 5a

Fig. 5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013017803 A